(19) Europäisches Patentamt
European Patent Office
Office européen des brevets

(11) Publication number: 0 336 262 A1

(12) EUROPEAN PATENT APPLICATION

(21) Application number: 89105458.7

(22) Date of filing: 28.03.89

(51) Int. Cl.4: C12H 1/16

(30) Priority: 28.03.88 JP 71827/88
20.03.89 JP 65978/89

(43) Date of publication of application:
11.10.89 Bulletin 89/41

(84) Designated Contracting States:
CH DE ES FR GB IT LI

(71) Applicant: SANWA SHURUI CO., LTD
4-3 Karashima,
Usa-shi Oita-ken(JP)

Applicant: E.I.M. ELECTRIC CO., LTD.
14-11, Chikuchi-machi
Yahatanishi-ku Kitakyushu-shi(JP)

(72) Inventor: Igisu, Taro
1-12-9 Jiyugaoka
Munakata-shi Fukuoka-ken(JP)
Inventor: Omori, Toshiro
Seifu-ryo 103 2850-1 Yokkaichi
Usa-shi Oita-ken(JP)
Inventor: Shimoda, Masahiko
Kofu Heights 101 716-3 Joi2Usa-shi
Oita-ken(JP)

(74) Representative: Kraus, Walter, Dr. et al
Patentanwälte Kraus, Weisert & Partner
Thomas-Wimmer-Ring 15
D-8000 München 22(DE)

# (54) Process for manufacturing alcoholic liquors with well-aged quality within a short period of time utilizing ultrasonic vibration.

(57) A process for producing alcoholic liquors with improved flavors and taste, and a long-time storeable property in which alcoholic liquors comprising alcohol and water as the main ingredients, which comprises applying to a starting alcoholic liquor ultrasonic vibration at a vibrating frequency in the range of from 8 KHz to 14 KHz under the vibrating condition with a amplitude of from 0.5 to 10 µm while maintaining said starting alcoholic liquor at a desired temperature.

The process is to promote the aging due to physical change of cluster between alcohol molecules and water molecules. Therefore, it is possible to reduce and moderate stimulating odors and tastes inherent to alcohol solution with no change for flavors. The process can be applied to almost all kinds of alcohol-containing liquors.

EP 0 336 262 A1

# PROCESS FOR MANUFACTURING ALCOHOLIC LIQUORS WITH WELL-AGED QUALITY WITHIN A SHORT PERIOD OF TIME UTILIZING ULTRASONIC VIBRATION

## FIELD OF THE INVENTION

The present invention relates to a process for manufacturing alcoholic liquors such as brewages, distilled liquors or mixed alcoholic liquors with improved flavor and well-aged quality utilizing ultrasonic vibration. More particularly, the present invention relates to a method for aging alcoholic liquors which is capable of attaining the aging effects similar to those obtained by traditional processes for aging alcoholic liquors within a short period of time by processing such alcoholic liquors by means of ultrasonic vibration at a specific vibrational frequency, without relying on the traditional aging processes.

## BACKGROUND OF THE INVENTION

Alcoholic liquors are generally classified depending on the production processes into brewages, distilled liquors and mixed alcoholic liquors. There have been known "sake", beer, wine, etc. as the brewages, "SHO-CHU (low class distilled spirit)", whiskey, brandy, etc. as distilled liquors, and sweet "sake" used as seasoning, liqueur and synthetic "sake" as mixed alcoholic liquors.

By the way, since such alcoholic liquors generally contain alcohols at high concentration, they have alcoholic odors or some stimulating odors, as well as exhibit stimulating bitter taste in the state as they are produced. Those alcoholic liquors as produced, i.e., starting alcoholic liquors are still in a not-refined state in view of the quality, which is expressed, for example, as "premature", not balanced flavors "crude", etc. Accordingly, for refining them into commercial products, they are stored in appropriate containers being placed at cold and dark places with less temperature change for a long period of time, for example, several months at the shortest or, sometimes, as long as several tens of years for aging, and finished into desirable states. However, the quality of such alcoholic liquor varies depending on the year of storage. In the case of whiskey or brandy, for instance, the starting alcoholic liquor is aged in an oak barrel being placed at a cold and dark place, and the product is classified in view of the quality depending on the years of storage as is well-known. While there is a difference in the quality depending on the aging period for the starting alcoholic liquor by applying such aging, the foregoing problems concerning the starting alcoholic liquor as produced are substantially eliminated, and the aged alcoholic liquor can be handled as a commercial product.

However, the aging for the starting alcoholic liquor requires a special space therefor and also involves problems that the productivity is extremely poor because a long period of time is required for the aging and, accordingly, several proposals have been made as the countermeasures for these problems.

For such proposals, there are chemical methods and physical methods. The chemical methods include: stirring of the starting alcoholic liquor while blowing ozone or oxygen: applying ultraviolet rays or optical rays of neon lamps, etc. to the starting alcoholic liquor: processing of the starting alcoholic liquor by utilizing the oxidizing and extracting effects of ultrasonic waves: and processing of the starting alcoholic liquor by using a metal catalyst such as nickel or titanium, thereby causing chemical change in the ingredients for the starting alcoholic liquor to render it into a desired state. However, none of such means provides the aging effect attained by the so-called traditional process as described above, although the effect of reducing the stimulating taste can be obtained to some extent, and the thus processed can not be actually commercialized.

On the other hand, the physical methods include: storing the starting alcoholic liquor at high temperature (40 °C - 60 °C): applying abrupt pressure change to the starting alcoholic liquor with ultrasonic waves: applying high frequency current to the starting alcoholic liquor: applying high frequency induction heating to the starting alcoholic liquor: irradiating the starting alcoholic liquor with X-rays: and irradiating the starting alcoholic liquor with $\gamma$-rays, thereby causing change in the liquid constitution of the starting alcoholic liquor to be in a desired state. However, by the same reason as in the chemical methods described above, no expected aging effect can be obtained by any of such physical means, and the thus processed can not be actually commercialized

Among the above-mentioned proposed method, there are many reports for the aging of the starting alcoholic liquor by utilizing ultrasonic waves, but none of them has yet been generalized as industrially applicable means. The reason is that: the methods which are considered effective are those of carrying out the aging by extracting effective ingredients from barrel materials or buy so-called chemical ingredient change such as decomposition of aldehydes, fusel oils, etc. in the starting alcoholic liquor using intense ultrasonic waves at high power

In this case, there are used ultrasonic waves at a high frequency range of 2 MHz, 1 MHz, 950 KHz etc., and as a result, the quality is often lowered even compared with that of the not-processed starting alcoholic liquor and, in addition, it is difficult to manufacture a practical device for generating such ultrasonic waves. And it has been reported the fact that no discernible aging effect can be obtained by the use of ultrasonic waves of a low frequency range such as 16.5 KHz 300 KHz, etc. No positive study has been made since then for the aging of the starting alcoholic liquor by utilizing ultrasonic waves.

## SUMMARY OF THE INVENTION

It is a principal object of the present invention to attain the aging of alcoholic liquors such as brewages, distilled liquors and mixed alcoholic liquors into a desired state by a simple method and in a short period of time, which used to require so far a long period of time by the traditional aging process.

Another object of the present invention is to provide a process for aging a starting alcoholic liquor that is capable of aging the starting alcoholic liquor in a short period of time to a level equal to or higher than that obtained by the aforementioned traditional aging process, by utilizing ultrasonic technique which has been considered not effective and not preferred in the relevant of the art.

For overcoming the foregoing problems in the prior art, the present inventors have made various attempts for aging alcoholic liquors by not using such ultrasonic waves in a frequency range of higher than 20 KHz considered so far in the technique of utilizing the ultrasonic waves, but by using ultrasonic waves in a frequency range of less than 20 KHz including audible region, that is, from 2 KHz to 20 KHz which has not ever been tried at all in the art of producing drinks and foods. As a result, it has been found that alcoholic liquors can be aged to a level as comparable with or higher than that attained when they are aged by being stood still from several months to several years, by applying ultrasonic processing to such alcoholic liquors by irradiating ultrasonic waves of a specific frequency in the range of from 8 KHz to 14 KHz with such an extent of amplitude as not causing intense cavitation, that is, from 0.5 μm to 10 μm at a temperature from 20° C to 75° C.

The present inventors have made a further study based on the foregoing findings, and as a result, have accomplished the present invention.

Accordingly, the feature of the present invention resides in a process for manufacturing alcoholic liquors with improved flavors and tastes and a long-storeable property, which comprises conducting aging to alcoholic liquors comprising alcohols and water as the main constituents by applying ultrasonic vibration at an ultrasonic vibrational frequency in the range of from 8 KHz to 14 KHz under the vibrating conditions with an amplitude from 0.5 μm to 10 μm while maintaining the temperature of the liquors from 20° C to 75° C.

According to the method of the present invention, the following various advantages are provided.

(i) In comparison of commercially available products of 10-years aged distilled liquors with the products obtained by the process according to the present invention, the process of the present invention is extremely advantageous from an economical point of view, while considering the rate of interest for 10-years and about 20 to 30 % of evaporation loss during 10 years storage in oak barrel together.

(ii) The process according to the present invention can be practiced in a relatively simple production apparatus, and various kinds of alcoholic liquors can be aged into desired states in a short period of time by means of a simple method and at a low electric power consumption.

(iii) Since the process according to the present invention is a method of promoting the aging due to the physical change of cluster between the alcohol molecule and the water molecule, the stimulating odors and tastes inherent to alcoholic solutions can be reduced and moderated with no change in the flavors and tastes of liquors at all and the process according to the present invention can be applied for aging almost all kinds of alcoholic liquors.

(iv) According to the process of the present invention, the aging effect similar to that of about ten month storage can be attained by the batchwise irradiation processing within a short period of time, for example, for 60 minutes, the effect can last even during storage after the processing, and the aging is advanced as the storing period proceeds when combined with the traditional natural aging method by storing.

(v) Brewages such as "sake", beer and wine are sometimes get tinted and stale due to the change in the chemical ingredients during storage to worsen the evaluation in view of the quality, but since the aging is advanced between water and alcohol in a short period of time according to the process of the present invention, it is possible to obtain products of fresh quality, nice to taste and causing less quality degradation even during long time storage.

## BRIEF DESCRIPTION OF THE DRAWINGS

Fig. 1 is a schematic explanatory view for an apparatus suitable for practicing the process according to the present invention.

Fig. 2 is a graph showing a relationship between the processing conditions and the aging effect.

Fig. 3 is a graph showing a relationship between the processing time and the heat of endothermic peak of alcohol.

Fig. 4 is a view illustrating the aging effect for the "SHO-CHU" by the process according to the present invention.

## DESCRIPTION OF THE PREFERRED EMBODIMENTS OF THE INVENTION

The ground for the constituent factors in the process of the present invention will be described specifically below based on the results of the experiments.

The aging effect in the following descriptions is judged by conducting a known sensory evaluation (so-called panel test), as well as by the measurement of known differential thermal analysis (DSC method) (using, for example, a differential scanning calorimeter (DSC), manufactured by Seiko Denshi Kogyo K.K.).

### (1) Study on the Effective Ultrasonic Wave

Ultrasonic wave vibrating treatment was conducted on an aqueous 25 % alcohol solution by direct irradiation of ultrasonic wave in the range of from 2 KHz to 20 KHz on every 1 - 2 KHz step under the conditions of a processing amount of 150 ml, a processing period for 1.5 hours, a processing temperature at room temperature and an amplitude of 1 µm by using a known ultrasonic wave generator (OSCILLATING AMPLIFIER, MODEL PET-OA, manufactured by IMV Co.). And the ultrasonic wavelength effective for providing the aging effect was tried to find. Selection of the effective ultrasonic wavelength was carried out in view of whether promotion was provided on the aging effect, wherein the effect was judged by a panel comprising 17 well-trained panelists as to whether "mellow" taste exhibited a meaningful significance or not. In Table 1, there were shown the results of the sensory evaluation conducted by the said panel. From the results shown in Table 1, the following facts have been found. That is, meaningful effect for the aging promotion can be recognized with a frequency ranging from 8 KHz to 14KHz. In view of the average evaluated score values in Table 1, based on the average score value 4 for not-processed 25 % alcohol, the average score value is best as 3.4 for each of the cases processed at 12 KHz and 13 KHz, 3.5 for each of the cases processed at 10 KHz and 11 KHz, 3.6 for each of the cases processed at 9 KHz and 14 KHz and 3.7 for the case processed at 8 KHz. In Table 2, there were collectively illustrated the results for the sensory evaluation of the meaningful significance for the average score values in the study of the effective ultrasonic wavelength in Table 1. From the results shown in Table 2, the following facts have been found. That is, in the case when processed at 13 KHz, an excellent processing effect is obtained, with a great meaningful significance at 5 % level as compared with the control and each of the cases processed at 20 KHz, 18 KHz, 17 KHz, 16 KHz, 15 KHz and 6 KHz respectively. In the case processed at 12 KHz, an excellent processing effect is obtained with a great meaningful significance at 5 % level as compared with the control and each of the cases treated at 20 KHz, 17 KHz, 16 KHz, 15 KHz and 6 KHz. In each of the cases processed at 10 KHz and 11 KHz, a great meaningful significance is recognized as compared with case processed at 20 KHz.

### (2) Processing Temperature

It has been found that the aging for alcohol solution is promoted to provide a desired result when treated using ultrasonic waves of a frequency range of from 8 KHz to 14 KHz as has been described above. On the basis of this finding, ultrasonic waves of a frequency of 12 KHz and 13 KHz were used for processing the aqueous 25 % alcoholic solution as described in the above step (1) at room temperature and at 57° C for each of the two cases, and evaluations were made for the thus processed aqueous alcohol solution in the same manner as in the above case (1), particularly, with respect to the stimulating odors and tastes. The results obtained for the evaluations were as shown in Table 3. From the results shown in Table 3, the following facts have been found. That is, the best result is provided with respect to the odor and taste when processed at 12 KHz and at a temperature of 57° C: followed, successively, by the cases when processed at 13 KHz at a temperature of 57° C, at 13 KHz at normal temperature, at 12 KHz at normal temperature and, finally, for the case of the control.

From the foregoings, it has been found that, in the case when the aqueous alcohol solution is processed using ultrasonic waves of a specific frequency range, the aging promoting effect is enhanced by elevating the processing temperature of the aqueous alcohol solution.

(3) Relationship between the frequency range of the ultrasonic wave used and the range of the processing temperature

From the results obtained in the foregoing step (1), it has been found that desired aging can be practiced for an alcohol solution (that is, alcoholic liquor) when it is treated with ultrasonic waves of a specific frequency in the range of from 8 to 14 KHz. It has been also found from the results obtained in the foregoing step (2) that the aging effect can further be promoted by elevating the temperature of the alcohol solution upon the ultrasonic wave treatment. In this connection, an examination was made about the relationship between the frequency range of the ultrasonic waves to be employed and the temperature of an alcohol solution when treated with the ultrasonic waves.

That is, an aqueous 25 % alcohol solution was firstly prepared. It was processed by irradiating ultrasonic waves of a frequency of 13 KHz and at various temperatures as shown in Table 4. In this way, there were prepared a plurality of samples at various processing temperatures. Each of these samples as obtained was evaluated mainly in view of the stimulating odor and taste in the same manner as in the foregoing step (1). As a result, there were obtained the results as shown in Table 4. The results shown in Table 4 were expressed by a graph (symbols:Δ ) in Fig. 2. In Fig. 2, there were also expressed the results shown in Table 1 together as a graph (simbol: O ).

From the graphs shown in Fig. 2, the following facts have been found. That is, an alcoholic liquor can be aged in desired states in the case of processing it using ultrasonic waves of a frequency in the range of, preferably, from 8 KHz to 14 KHz, most preferably, from 10 KHz to 13 KHz, while controlling the temperature of the alcohol liquor to be processed to a temperature of, preferably, from 20° C to 75° C, more preferably, from 35° C to 70° C and, most preferably, from 45° C to 65° C.

(4) Amplitude of the ultrasonic wave of a frequency in the range of from 8 KHz to 14 KHz

In the case of processing liquid utilizing ultrasonic wave, the ultrasonic wave is directly or or indirectly irradiated to the liquid to be processed, and it is generally recognized as being important to have a due consideration on cavitation caused in the liquid. And it has been known that the cavitation brings about effects of oxidation, heating, stirring, etc. to the liquid to be processed and these effects depend on the energy quantity, that is, the amplitude (or ultrasonic wave intensity) possessed by the ultrasonic wave as irradiated.

In view of the above, the present inventors have made studies on the ultrasonic wave of a frequency in the rage of from 8 to 14 KHz, which has been confirmed to be effective for aging alcoholic liquors in the foregoing experiments, as to what range of amplitude is effective including the value of 1 µm employed in the above-mentioned experiments for attaining the purpose of the present invention

That is, firstly, there was provided an aqueous 25 % alcohol solution as a specimen to be tested. The specimen was subjected to ultrasonic wave processing in a batchwise system under the conditions of frequency at 12 KHz, the amplitude of from 0.1 to 20 µm and direct irradiation by using the apparatus shown in Fig. 1, which will be detailed later. The processing amount of the alcohol solution was adjusted to 500 ml. It was processed at a processing temperature (liquid temperature) of 50° C for 2 hours. In this way, 6 kinds of samples to be tested were prepared. Sensory evaluation was made on each of the samples just after the processing and after stored for one week in the same manner as in the foregoing step (1), to evaluate the effect for the aging promotion. As a result, there were obtained the evaluation results as shown in Table 5. From the results shown in Table 5, the following facts have been found. That is, (i) a remarkable effect for aging promotion is observed both at the stage right after the processing and at the stage after storage for one week at each of the amplitudes of 0.5 µm, 1 µm, 5 µm and 10 µm respectively: and the aging effect is improved as the amplitude is increased within the above-specified range: (ii) in the case where the amplitude is 0.1 µm, no discernible effect for aging promotion is observed: and (iii) in the case where the amplitude is as greater as 20 µm, a remarkable effect is recognized as the score 2.9 for the evaluation relative to the score 4.0 in the case of the not-processed solution: however there is not observed a meaningful significance in the sensory evaluation after storage for one week, with the score 2.9 for which the evaluation is rather poor as compared with the control: and it is considered that this is attributable to the undesirable intense cavitation.

From the foregoings, it has been recognized that the optimum amplitude of the ultrasonic wave to be empolyed with a frequency in the range of from 8 to 14 KHz is from 0.5 µm to 10 µm.

Now, even in a case where the aging effect for an alcohol solution (alcoholic liquor) is provided by the processing using ultrasonic wave with a specific frequency as described above, it will somewhat vary depending on the amount of the alcohol solution to be processed and the processing period of time even if the above-mentioned temperature range and the above-mentioned amplitude range are used. Accordingly, the conditions for the processing temperature and the amplitude other than the frequency of the ultrasonic wave to be utilized should be properly determined within the foregoing respective ranges while considering the processing amount and the processing period of time and depending upon the kind of an alcoholic liquor to be processed.

The process according to the present invention which has been accomplished based on the foregoing findings can be practiced using an appropriate apparatus.

A preferred embodiment of such apparatus is such that is schematically shown in Fig. 1.

An ultrasonic generation system in the apparatus is shown in the figure has been provided by Cho-Onpa Kogyo Co, with generating frequency of from 4 KHz to 20 KHz and power of 0 to 1.2KW (amplitude 0.1 µm to 20 µm).

In the figure, there are shown an ultrasonic generator 1, a power conditioner 2, a horn 3, a vibrator 4, a cooling fan 5, a position controlling bet 6, an immersion vessel 7, a processing container 8, flow pipes 9, pumps 10, a constant temperature bath 11, a liquor container 12 (container for alcoholic liquor to be processed), flow pipes 13 and an agitating blade 14.

In the case of using the apparatus shown in Fig. 1, the process according to the present invention is practiced, for example, in the following. That is, a liquor to be processed (alcoholic liquor) is at first charged in the processing container 8, which is placed on the position controlling bed 6. The amplitude is optimally controlled by means of the horn 3 and the power conditioner 2. Water or warmed water is filled in the immersion vessel 7. In the case where necessary to control its temperature, said water is recycled to the constant temperature bath 11. Then, the power source (not shown) for the ultrasonic generator 1 is switched on and the ultrasonic wave is irradiated to the liquid to be processed by way of the horn 3 for a predetermined period of time.

In the batchwise processing, the processing is carried out only in the processing container 8. In the case of the recycling continuous processing, the processing container 8 and the liquor container 12 are connected by means of the flow pipes 13 and the liquid to be processed is caused to recycle by the pump 10.

As the method of transmitting ultrasonic wave to the liquid to be processed, either of the direct irradiation method of placing a vibrator directly into the liquid or the indirect irradiation method of placing the liquid to be processed in the vessel and transmitting the ultrasonic wave from the vibrator through a medium may be employed.

For the vibration application method, the following method can, for example, be employed.

That is, there are: (i) a recycling method of sending a liquid to be processed from the main vessel by means of a pump to an ultrasonic vibrating processing portion and then returning it to the main vessel, (ii) a method of sending a liquid to be processed from a preliminary vessel by way of a pump passing through an ultrasonic vibrating portion to a main vessel and (iii) a batchwise processing method of applying ultrasonic vibration while stirring a liquid to be processed in a processing vessel using a stirrer.

Further, as a method of controlling the amplitude of ultrasonic vibration, the following methods can, for example, be employed.

That is, there are: (a) a method of controlling the amplitude by a power conditioner, (b) a method of controlling the range of the amplitude using an appropriate horn, (c) a method of controlling the amplitude by adjusting the distance between the object to be vibrated and the horn, and (d) a method of the controlling the amplitude by disposing a buffer between the object to be vibrated and the horn.

As for the material of which the processing container is made, it is necessary to selectively use an appropriate material which does not cause undesired effects on the quality of an alcoholic product to be processed. In view of this, glass or stainless steel is generally used. Other than these, ceramics, polyethylene, or like other material may be also used. In addition, there may be used porcelain, barrel material, etc. used for storing alcoholic products. In this case, desirable catalytic effect, chemical reaction effect due to the material of the container can be expected.

## EXPERIMENT

There was provided an aqueous 30 % alcohol solution. And there were prepared five samples from the alcohol solution: a not-stored sample, a sample stored for 11 months, a sample stored for 14 months, a sample stored for 15 months and a sample stored for 17 months. For each of the five samples, there was observed an endothermic peak calorie by way of the known DSC method.

The results as obtained were plotted in a graph as shown by simbols "○" to obtain a calibration curve as shown in Fig. 3.

Then, using the apparatus shown in Fig. 1, 500 ml of the foregoing aqueous 30 % alcohol solution was subjected to the aging processing in the batch system with indirect irradiation of ultrasonic wave at a frequency of 14 KHz and an amplitude of 10 µm while maintaining the alcohol solution at a temperature of 40°C for 10 minutes, 20 minutes, 40 minutes and 60 minutes respectively, to thereby obtain four samples. For each of the four samples, there was observed an endothermic peak calorie in the same manner as in the above case. The results as obtained were also plotted in a graph as shown by symbols "Δ" in Fig. 3. From the results, it has been found that the respective samples received ultrasonic wave processing for 20, 40 and 60 minutes respectively show an aging effect corresponding to 6 months aging storage, 9 months aging storage and 10 months aging storage, respectively.

Further, 900 ml of the foregoing aqueous 30 % alcohol solution was treated in the apparatus shown in Fig. 1 in which the processing container 8 is connected to the liquor container 12 in the constant temperature bath 12, while recycling the solution at a flow rate of 120 ml/min by way of the pump, and by indirect irradiation of ultrasonic wave at a frequency of 14 KHz and at an amplitude of 10 µm while maintaining the solution at 40°C and with a processing period of time for 5 minutes, 10 minutes, 20 minutes, 1 hour and 3 hours respectively, to thereby obtain five samples. For each of the thus obtained samples, an endothermic peak calorie was observed in the same manner in the above case. The results as obtained were plotted in a graph as shown by symbols "♦" in Fig. 3. From the results shown in Fig. 3, it has been found that the respective samples obtained when continuously treated for 20 minutes, 1 hour and 3 hours show an aging effect corresponding to 3 months aging storage, one year and 6 months aging storage, and two years and 6 months aging storage, respectively.

The processing container 8 used therein was made of glass of 3 mm in wall thickness. It is considered that the energy of the ultrasonic wave at a frequency of 14 KHz is attenuated on the horn surface from that for 10 µm of the amplitude.

While the attenuation rate will vary depending on the distance between the horn and the processing vessel, the specific gravity of warmed water as a transmission medium, the permeability of glass, and other processing conditions, when the attenuation rate was examined by measuring the ultrasonic pressure in the processing liquid to be processed using a known microminuature submerged microphone (trade name: HYDROPHONE Type 8103, manufactured by Brüer and Kjær Co. Ltd.) to observe the amplitude, the value was estimated to be about 8 µm. Now, the amplitude of from 0.5 to 10 µm employed in the present invention means the amplitude of an ultrasonic wave transmitted to a liquid to be processed, and it is not limited to the amplitude on the surface of the horn upon processing. Accordingly, it is required that the amplitude of the ultrasonic vibration with a frequency in the range of from 8 KHz to 14 KHz employed in the present invention should be properly selected within the above-mentioned range depending on the material and the scale of the processing container used, or like other related conditions, so that a desired ultrasonic wave processing be carried at such a moderate strength as not causing intense cavitation in the liquid to be processed.

## EXAMPLES

The present invention is to be explained referring to examples, but it should be noted that the invention is not restricted to these examples.

Example 1

Commercial whiskey (38 % alcohol content) was processed under the conditions shown in Table 6 and by way of the above-mentioned method using the apparatus shown in Fig. 1 for 3 hours. DSC charts for not-processed whiskey and processed whiskey were prepared in accordance with a known method. As a result, it has been found that an endothermic peak calorie of alcohol is apparently reduced in the case of the processed whiskey, and the calorie of the not-processed whiskey and that of the processed whiskey showing most significant effect are 22.5 mj/mg and 17.6 mj/mg respectively, and the reduction rate of the latter is 78.2 %. The results of the sensory evaluation for each sample were as shown in Table 6. In Table 6, it was judged of whether alcoholic stimulating odors of the processed whiskey was strong or weak with respect to the score 4 for the not-processed whiskey. As a result, it has been found that the stimulating odors of alcohol in the processed whiskey are weak and mild. Further, it has also been found that promotion in the aging effect is excellent in the case of the processed whiskey.

Example 2

In this example there was used a commercially available second class "SHO-CHU" (low class distilled spirit) (alcohol content: 42 %) as the starting liquor sample.

Using the starting liquor sample, there were provided three kinds of samples: Sample (1): the starting liquor sample as it is, Sample (2): simply stored the starting liquor sample for 5 months, and Sample (3): subjected the starting liquor sample to the ultrasonic wave aging processing in the foregoing batch system using the apparatus shown in Fig. 1 in the foregoing manner for 2 hours, which was followed by storage for 5 months.

For each of Samples (1) to (3), an endothermic peak calorie was observed by way of the known DSC method. The results as obtained showed: 27.8 mj/mg for Sample (1), 25.6 mj/mg for Sample (2) and 23.2 mj/mg for Sample (3).

From the results, it has been recognized that Sample (3) is of a significantly reduced endothermic peak calorie (23.2 mj/mg), which means that Samples (3) is being well-aged, and with respect to the aged degree, Sample (3) is superior to any of Samples (1) and (2). This situation has been confirmed by the results of the sensory evaluation which was carried out in the same manner as in Table 1.

Further, the above observed results were collectively shown in Fig. 4. From what shown in Fig. 4, it has been found that the aged degree of Sample (3) is superior to that of any of Samples (1) and (2), and it is corresponding to more than 10 months' storage for aging.

Table 1:Finding of Effective Frequency of Ultrasonic Wave based on sensory evaluation with respect to alcoholic stimulating taste

(to be continued)

| frequency (kHz) \ panel | A | B | C | D | E | F | G | H | I | J |
|---|---|---|---|---|---|---|---|---|---|---|
| 2 | 3 | 4 | 4 | 4 | 4 | 3 | 4 | 3 | 4 | 4 |
| 4 | 3 | 4 | 4 | 4 | 4 | 4 | 4 | 4 | 4 | 4 |
| 6 | 3 | 4 | 4 | 4 | 4 | 4 | 4 | 4 | 4 | 4 |
| 7 | 4 | 4 | 4 | 4 | 4 | 4 | 4 | 4 | 4 | 4 |
| 8 | 3 | 4 | 4 | 3 | 4 | 4 | 4 | 4 | 4 | 3 |
| 9 | 3 | 4 | 4 | 3 | 4 | 4 | 4 | 3 | 3 | 4 |
| 10 | 2 | 3 | 4 | 3 | 4 | 4 | 4 | 4 | 4 | 4 |
| 11 | 3 | 4 | 4 | 3 | 4 | 4 | 4 | 4 | 3 | 4 |
| 12 | 3 | 4 | 3 | 3 | 3 | 4 | 3 | 4 | 3 | 4 |
| 13 | 3 | 4 | 3 | 2 | 3 | 4 | 3 | 4 | 3 | 4 |
| 14 | 4 | 4 | 3 | 3 | 4 | 3 | 4 | 3 | 4 | 4 |
| 15 | 4 | 4 | 4 | 4 | 4 | 4 | 4 | 3 | 4 | 4 |
| 16 | 3 | 4 | 4 | 4 | 4 | 4 | 4 | 4 | 4 | 4 |
| 17 | 3 | 4 | 5 | 4 | 4 | 4 | 4 | 4 | 4 | 4 |
| 18 | 3 | 4 | 4 | 4 | 4 | 4 | 4 | 4 | 4 | 4 |
| 20 | 4 | 4 | 4 | 4 | 4 | 4 | 4 | 4 | 4 | 4 |

Table 1:Finding of Effective Frequency of Ultrasonic Wave based on sensory evaluation with respect to alcoholic stimulating taste
(continued)

| panel / frequency (kHz) | K | L | M | N | O | P | Q | evaluated score (average value) |
|---|---|---|---|---|---|---|---|---|
| 2 | 4 | 4 | 4 | 4 | 4 | 4 | 5 | 3.9 |
| 4 | 4 | 4 | 4 | 3 | 4 | 4 | 4 | 3.9 |
| 6 | 4 | 4 | 4 | 4 | 5 | 4 | 4 | 4.0 |
| 7 | 4 | 4 | 4 | 3 | 4 | 4 | 3 | 3.9 |
| 8 | 4 | 4 | 4 | 3 | 3 | 4 | 4 | 3.7 |
| 9 | 4 | 4 | 4 | 3 | 4 | 3 | 4 | 3.6 |
| 10 | 4 | 3 | 4 | 3 | 3 | 3 | 3 | 3.5 |
| 11 | 3 | 3 | 3 | 3 | 3 | 3 | 4 | 3.5 |
| 12 | 3 | 4 | 4 | 3 | 3 | 4 | 3 | 3.4 |
| 13 | 4 | 3 | 3 | 3 | 4 | 4 | 3 | 3.4 |
| 14 | 3 | 3 | 4 | 3 | 4 | 4 | 4 | 3.6 |
| 15 | 4 | 4 | 4 | 4 | 4 | 4 | 5 | 4.0 |
| 16 | 4 | 4 | 4 | 4 | 4 | 4 | 5 | 4.0 |
| 17 | 4 | 4 | 4 | 4 | 4 | 4 | 4 | 4.0 |
| 18 | 4 | 4 | 4 | 3 | 5 | 4 | 4 | 3.9 |
| 20 | 4 | 4 | 5 | 4 | 4 | 4 | 5 | 4.1 |

Note A-Q : panelists
Evaluation Criteria : with respect to alcoholic stimulating taste
score 1 : very mellow
score 2 : mellow
score 3 : fairly mellow
score 4 : stimulating taste of not-processed 25% alcohol solution(control)
score 5 : somewhat crude
score 6 : crude

Table 2 : Observation of Significance based on the evaluated scores shown in Table 1

| frequency (kHz) | control | 20 | 18 | 17 | 16 | 15 | 14 | 13 | 12 | 11 | 10 | 9 | 8 | 7 | 6 | 4 |
|---|---|---|---|---|---|---|---|---|---|---|---|---|---|---|---|---|
| 2 | | | | | | | | | | | | | | | | |
| 4 | | | | | | | | | | | | | | | | |
| 6 | | | | | | | | * ↑ | * ↑ | | | | | | | |
| 7 | | | | | | | | | | | | | | | | |
| 8 | | | | | | | | | | | | | | | | |
| 9 | | | | | | | | | | | | | | | | |
| 10 | | * ← | | | | | | | | | | | | | | |
| 11 | | * ← | | | | | | | | | | | | | | |
| 12 | * ← | * ← | | * ← | * ← | * ← | | | | | | | | | | |
| 13 | * ← | ** ← | * ← | * ← | * ← | * ← | | | | | | | | | | |
| 14 | | | | | | | | | | | | | | | | |
| 15 | | | | | | | | | | | | | | | | |
| 16 | | | | | | | | | | | | | | | | |
| 17 | | | | | | | | | | | | | | | | |
| 18 | | | | | | | | | | | | | | | | |
| 20 | | | | | | | | | | | | | | | | |

<u>Note</u> * : significant at 5% level

** : significant at 1% level

↑, ← : showing the direction reducing the alcoholic stimulating taste

Table 3 : Effect of Processing Temperature

| frequency (kHz) | temperature (℃) | A | B | C | D | E | F | G | H | I | J | K | L | M | N | O | P | Q | evaluated score (average value) |
|---|---|---|---|---|---|---|---|---|---|---|---|---|---|---|---|---|---|---|---|
| 12 | 57 | 3 | 3 | 3 | 3 | 2 | 3 | 3 | 3 | 3 | 2 | 3 | 3 | 4 | 3 | 3 | 3 | 3 | 2.9 |
| 12 | * | 4 | 4 | 3 | 4 | 3 | 3 | 4 | 3 | 4 | 3 | 4 | 3 | 4 | 4 | 3 | 4 | 4 | 3.6 |
| 13 | 57 | 3 | 3 | 3 | 4 | 2 | 3 | 4 | 3 | 3 | 3 | 3 | 3 | 4 | 3 | 3 | 3 | 3 | 3.1 |
| 13 | * | 3 | 3 | 3 | 4 | 3 | 4 | 3 | 4 | 4 | 3 | 2 | 4 | 4 | 4 | 4 | 3 | 3 | 3.4 |
| ** | – | 4 | 4 | 4 | 4 | 3 | 4 | 4 | 4 | 4 | 4 | 3 | 4 | 4 | 4 | 4 | 4 | 4 | 3.9 |

Note A－Q : panelists

Evaluation Criteria : same as in Table 1

* : normal temperature

**: not-processed

Table 4 : Results of study on effective processing temperature (to be continued)

| processed temperature (°C) | A | B | C | D | E | F | G | H | I | J |
|---|---|---|---|---|---|---|---|---|---|---|
| 10 | 4 | 3 | 5 | 3 | 4 | 4 | 4 | 4 | 4 | 4 |
| 15 | 4 | 4 | 4 | 3 | 4 | 4 | 4 | 4 | 4 | 3 |
| 20 | 3 | 4 | 4 | 3 | 4 | 4 | 3 | 4 | 4 | 3 |
| 25 | 3 | 4 | 3 | 2 | 3 | 4 | 3 | 4 | 3 | 4 |
| 30 | 3 | 3 | 3 | 3 | 4 | 3 | 3 | 3 | 3 | 3 |
| 35 | 3 | 3 | 3 | 3 | 3 | 4 | 3 | 3 | 3 | 3 |
| 40 | 3 | 3 | 4 | 2 | 3 | 4 | 3 | 4 | 3 | 3 |
| 45 | 3 | 3 | 3 | 2 | 3 | 4 | 3 | 3 | 3 | 3 |
| 50 | 3 | 3 | 3 | 2 | 3 | 4 | 3 | 3 | 3 | 3 |
| 55 | 3 | 3 | 5 | 2 | 3 | 4 | 3 | 3 | 2 | 3 |
| 60 | 3 | 3 | 3 | 3 | 3 | 4 | 3 | 3 | 3 | 3 |
| 65 | 3 | 4 | 3 | 3 | 3 | 4 | 3 | 3 | 3 | 3 |
| 70 | 3 | 3 | 3 | 3 | 3 | 4 | 4 | 3 | 3 | 3 |
| 75 | 3 | 4 | 3 | 4 | 3 | 4 | 3 | 4 | 4 | 4 |
| 80 | 4 | 4 | 4 | 4 | 4 | 4 | 4 | 5 | 4 | 4 |

Table 4 : Results of study on effective processing temperature (continued)

| processed temperature (℃) | K | L | M | N | O | P | Q | evaluated score (average value) |
|---|---|---|---|---|---|---|---|---|
| 10 | 4 | 4 | 4 | 4 | 4 | 3 | 4 | 3.9 |
| 15 | 4 | 4 | 4 | 4 | 4 | 3 | 4 | 3.8 |
| 20 | 4 | 3 | 4 | 3 | 4 | 4 | 3 | 3.6 |
| 25 | 4 | 3 | 3 | 3 | 4 | 4 | 3 | 3.4 |
| 30 | 5 | 2 | 4 | 2 | 5 | 4 | 3 | 3.3 |
| 35 | 4 | 3 | 3 | 3 | 4 | 4 | 3 | 3.2 |
| 40 | 3 | 3 | 4 | 3 | 3 | 4 | 3 | 3.2 |
| 45 | 3 | 2 | 4 | 3 | 5 | 3 | 3 | 3.1 |
| 50 | 3 | 3 | 4 | 3 | 3 | 3 | 4 | 3.1 |
| 55 | 3 | 3 | 5 | 3 | 3 | 2 | 3 | 3.1 |
| 60 | 3 | 2 | 4 | 3 | 4 | 3 | 3 | 3.1 |
| 65 | 3 | 3 | 3 | 3 | 4 | 3 | 4 | 3.2 |
| 70 | 3 | 3 | 4 | 3 | 4 | 3 | 3 | 3.2 |
| 75 | 4 | 3 | 3 | 4 | 4 | 3 | 4 | 3.6 |
| 80 | 4 | 3 | 5 | 4 | 4 | 3 | 4 | 4.0 |

Note A-Q : panelists
Evaluation Criteria : same as in Table 1

Table 5 : Effect of Vibration Amplitude
(to be continued)

| Specimen No. | frequency (kHz) | processed temperature (°C) | processed period (hr.) | amplitude (μm) | evaluated time | A | B | C | D | E | F | G |
|---|---|---|---|---|---|---|---|---|---|---|---|---|
| 1 | 12 | 50 | 2 | 0.1 | * | 4 | 4 | 4 | 5 | 4 | 4 | 4 |
| | | | | | ** | 4 | 4 | 4 | 4 | 4 | 5 | 4 |
| 2 | | | | 0.5 | * | 3 | 4 | 4 | 4 | 3 | 4 | 4 |
| | | | | | ** | 4 | 4 | 3 | 3 | 4 | 4 | 4 |
| 3 | | | | 1 | * | 3 | 4 | 3 | 2 | 3 | 4 | 3 |
| | | | | | ** | 3 | 3 | 3 | 2 | 3 | 4 | 3 |
| 4 | | | | 5 | * | 3 | 3 | 3 | 3 | 3 | 3 | 3 |
| | | | | | ** | 3 | 3 | 3 | 3 | 3 | 3 | 3 |
| 5 | | | | 10 | * | 3 | 3 | 3 | 2 | 3 | 4 | 3 |
| | | | | | ** | 4 | 3 | 4 | 4 | 3 | 4 | 3 |
| 6 | | | | 20 | * | 3 | 3 | 3 | 2 | 3 | 3 | 2 |
| | | | | | ** | 4 | 4 | 4 | 5 | 4 | 5 | 4 |

Table 5 : Effect of Vibration Amplitude (continued)

| Specimen No. | amplitude (μm) | evaluated time | H | I | J | K | L | M | N | O | P | Q | evaluated score (average value) |
|---|---|---|---|---|---|---|---|---|---|---|---|---|---|
| 1 | 0.1 | * | 4 | 5 | 5 | 4 | 4 | 4 | 4 | 4 | 4 | 4 | 4.2 |
| | | ** | 4 | 5 | 4 | 4 | 4 | 4 | 4 | 4 | 4 | 4 | 4.1 |
| 2 | 0.5 | * | 4 | 4 | 4 | 4 | 4 | 3 | 3 | 4 | 3 | 4 | 3.7 |
| | | ** | 4 | 4 | 3 | 4 | 4 | 3 | 3 | 4 | 4 | 4 | 3.7 |
| 3 | 1 | * | 4 | 3 | 4 | 4 | 3 | 3 | 3 | 4 | 4 | 3 | 3.4 |
| | | ** | 4 | 3 | 3 | 4 | 4 | 3 | 3 | 4 | 4 | 3 | 3.3 |
| 4 | 5 | * | 4 | 3 | 3 | 4 | 4 | 3 | 3 | 4 | 3 | 4 | 3.3 |
| | | ** | 4 | 3 | 3 | 4 | 4 | 3 | 3 | 4 | 3 | 4 | 3.3 |
| 5 | 10 | * | 4 | 3 | 3 | 4 | 4 | 3 | 3 | 3 | 3 | 3 | 3.2 |
| | | ** | 4 | 3 | 3 | 4 | 4 | 3 | 3 | 4 | 4 | 4 | 3.6 |
| 6 | 20 | * | 3 | 3 | 3 | 3 | 4 | 3 | 3 | 3 | 3 | 3 | 2.9 |
| | | ** | 4 | 5 | 5 | 5 | 4 | 4 | 4 | 4 | 4 | 4 | 4.3 |

Note A-Q : panelists
Evaluation Criteria : same as in Table 1
* : right after processed
** : after storage for one week

Table 6

| Processing conditions for commercially available second class whisky and evaluation results on the processed | | | | | | | | |
|---|---|---|---|---|---|---|---|---|
| processed temperature (°C) | frequency (kHz) | amplitude (μm) | processed period (hr.) | amount processed (mℓ) | average value of the evaluated scores | | calorie (mJ/mg) | judgement for ageing effect |
| | | | | | fragrance | taste | | |
| 50 | 4 | 5 | 3 | 800 | 4.0 | 4.1 | 22.5 | × |
| | 10 | | | | 3.5 | 3.2 | 20.5 | ○ |
| | 12 | | | | 2.6 | 2.6 | 17.6 | ◎ |
| | 16 | | | | 4.1 | 3.9 | 22.6 | × |
| 15 | 12 | 5 | 3 | 800 | 4.0 | 4.2 | 22.6 | × |
| 20 | | | | | 3.6 | 3.0 | 20.1 | ○ |
| 50 | | | | | 2.6 | 2.6 | 17.6 | ◎ |
| 80 | | | | | 3.8 | 3.9 | 22.0 | × |
| Note | | | | | | | | |
| ◎ : very effective | | | | | | | | |
| ○ : effective | | | | | | | | |
| × : not effective | | | | | | | | |

**Claims**

1. A process for producing an alcoholic liquor with improved flavors and tastes and a long-time storeable property which comprises applying to a starting alcoholic liquor ultrasonic vibration at a vibrating frequency in the range of from 8 KHz to 14 KHz under the vibrating condition with an amplitude of from 0.5 to 10 μm while maintaining said starting alcoholic liquor at a desired temperature to thereby age said starting alcoholic liquor within a short period of time.

2. The process according to claim 1, wherein said starting alcoholic liquor is maintained at a temperature of from 20 to 75°C.

FIG. 1

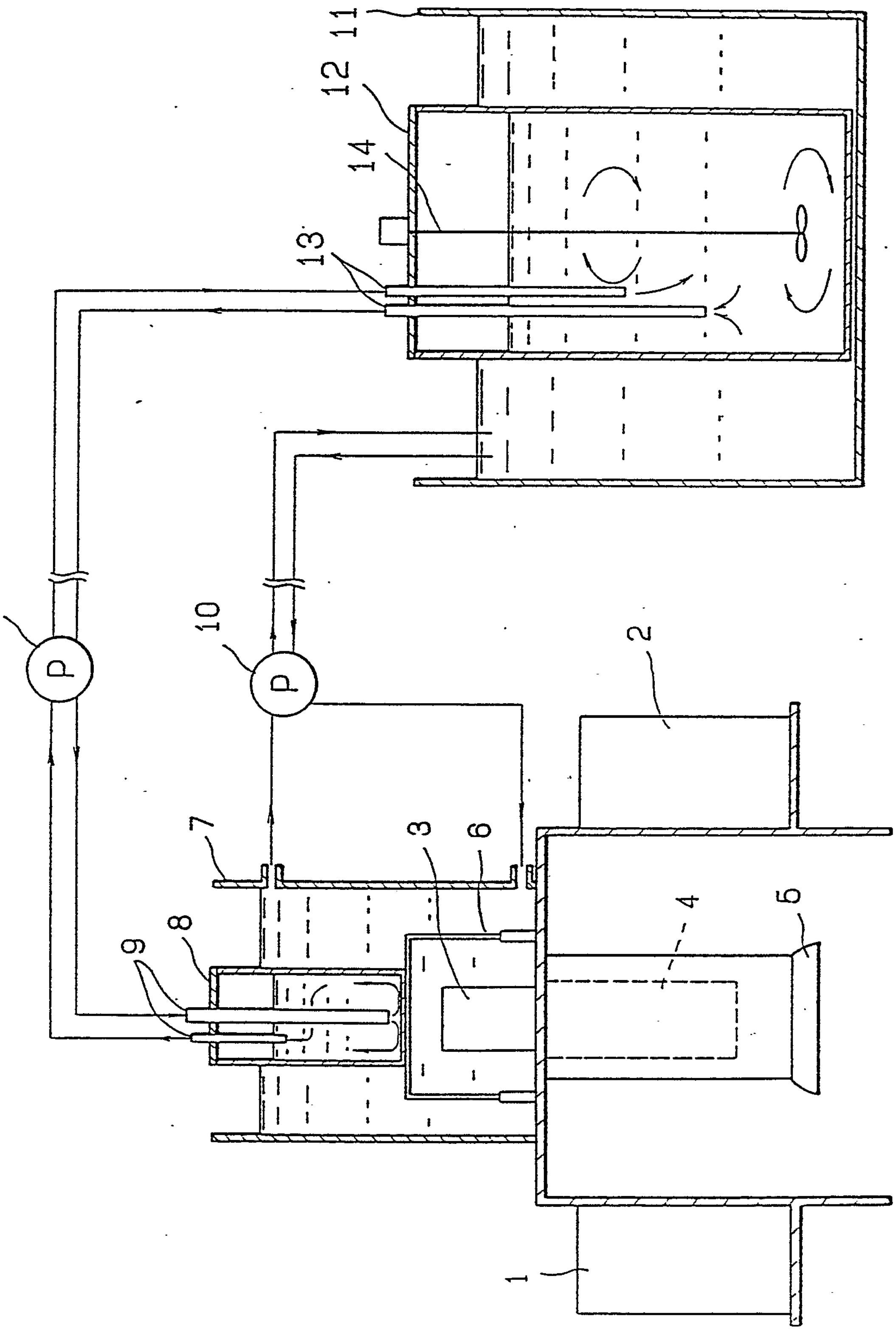

FIG. 2

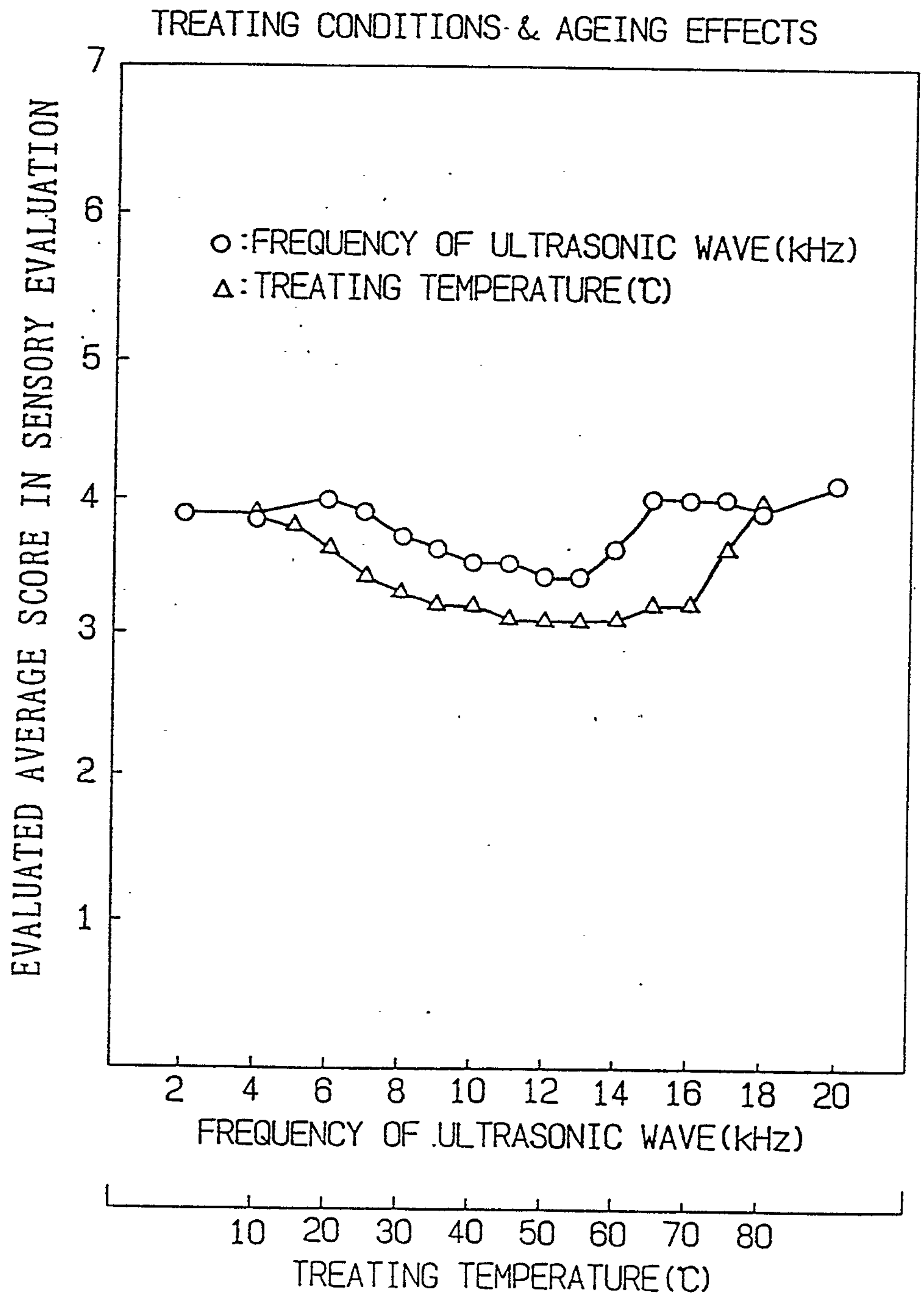
TREATING CONDITIONS & AGEING EFFECTS
EVALUATED AVERAGE SCORE IN SENSORY EVALUATION
7
6
5
4
3
2
1
○:FREQUENCY OF ULTRASONIC WAVE(kHz)
△:TREATING TEMPERATURE(℃)
2
4
6
8
10
12
14
16
18
20
FREQUENCY OF ULTRASONIC WAVE(kHz)
10
20
30
40
50
60
70
80
TREATING TEMPERATURE(℃)

# FIG. 3

CALORIE OF ALCOHOL ENDOTHERMIC
PEAK IN DIFFERENTIAL THERMAL ANALYSIS

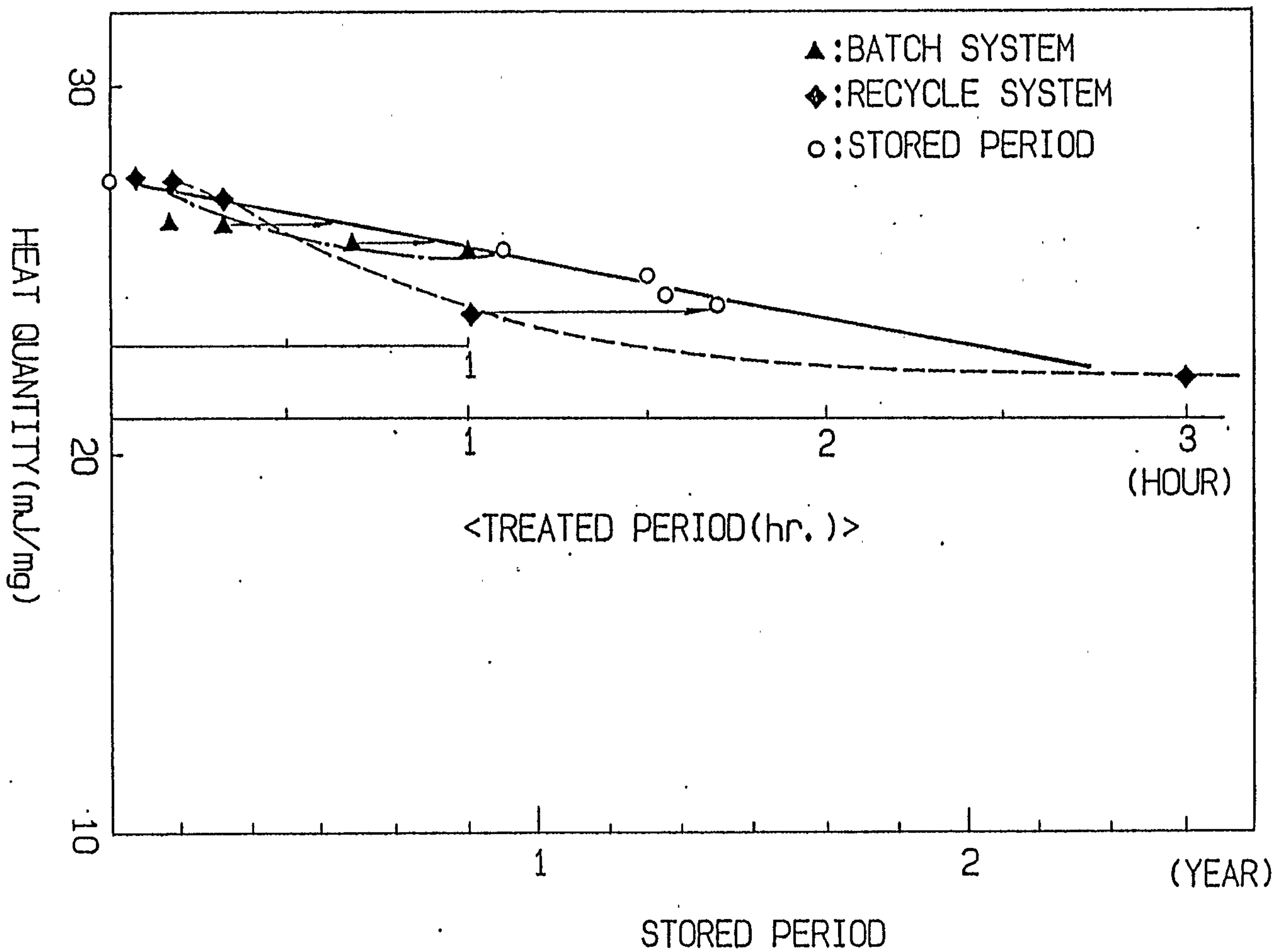

FIG. 4

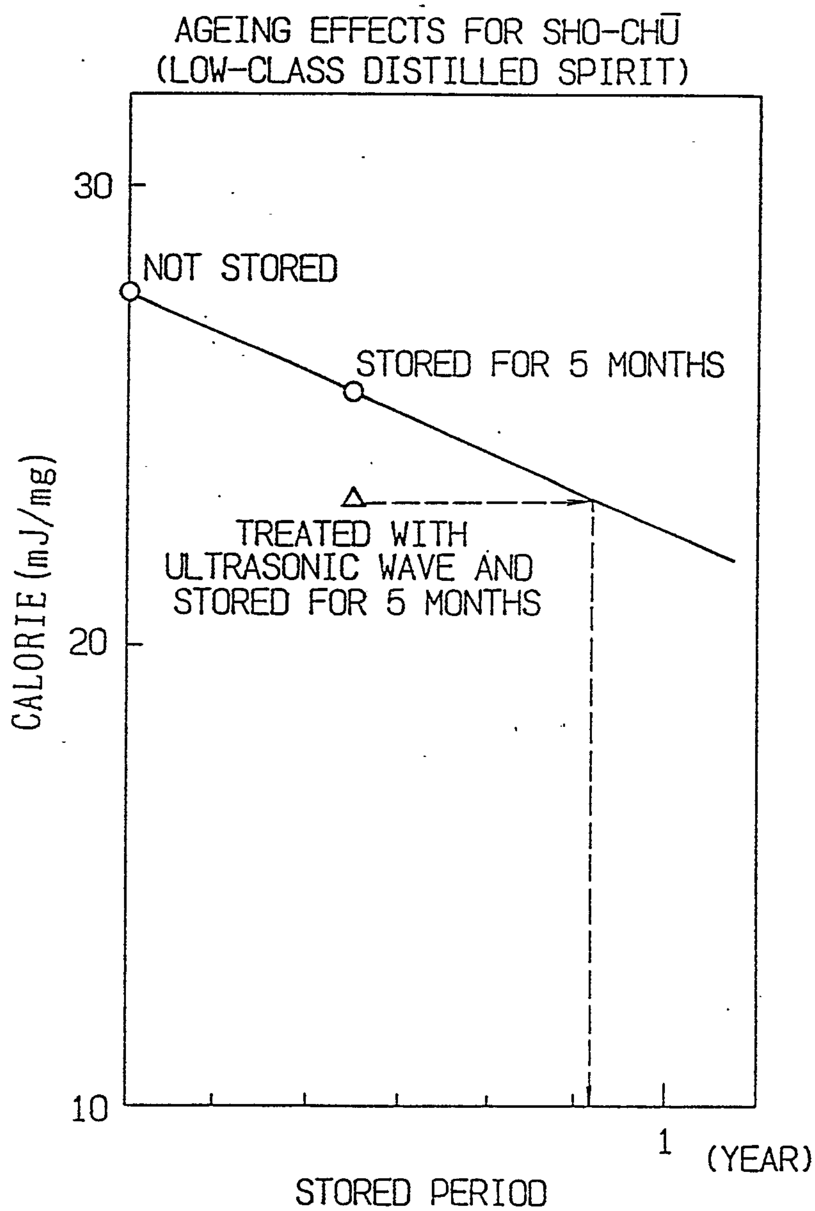
AGEING EFFECTS FOR SHO-CHŪ
(LOW-CLASS DISTILLED SPIRIT)
30
NOT STORED
STORED FOR 5 MONTHS
CALORIE (mJ/mg)
TREATED WITH
ULTRASONIC WAVE AND
STORED FOR 5 MONTHS
20
10
1
(YEAR)
STORED PERIOD

European Patent Office

# EUROPEAN SEARCH REPORT

Application Number

EP 89 10 5458

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 830 039 (ATLAS-WERKE AG)<br>* Claims; figures *<br>--- | 1,2 | C 12 H 1/16 |
| X | FR-A- 964 295 (P. BUGARD)<br>* Claims; figures *<br>--- | 1,2 | |
| A | FR-A-1 022 049 (SIEMENS-SCHUCKERTWERKE AG)<br>* Claims; figures; page 1, column 2, paragraphs 2,3 *<br>--- | 1,2 | |
| A | GB-A- 634 124 (E.A. POKORNY)<br>* Claims; page 2, line 50 *<br>--- | 1,2 | |
| A | FR-A-2 416 265 (VEB RATIONALISIERUNG HALLE)<br>* Claims; figures *<br>----- | 1,2 | |

TECHNICAL FIELDS SEARCHED (Int. Cl.4)

C 12 H

The present search report has been drawn up for all claims

| Place of search | Date of completion of the search | Examiner |
|---|---|---|
| THE HAGUE | 17-07-1989 | COUCKE A.O.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)